# EUROPEAN PATENT APPLICATION

(11) **EP 4 769 191 A1**
(43) Date of publication of application: **01.07.2026**
(21) Application number: 25210226.4
(22) Date of filing: 21.10.2025
(51) Int. Cl.: G06F 21/57, H04W 4/44, H04W 12/30

(54) **METHOD AND SYSTEM FOR EVALUATING APPLICATION INSTALLATION SUITABILITY BASED ON VEHICLE SECURITY PROFILE**

(30) Priority: 30.12.2024 KR 20240199711
(71) Applicant: Autocrypt Co., Ltd., Seoul 07241 (KR)
(72) Inventor: PARK, Hoon Yong, 07777 Gangseo-gu, Seoul (KR); SONG, Ho Seung, 07247 Yeongdeungpo-gu, Seoul (KR); KO, Chan Young, 06630 Seocho-gu, Seoul (KR); JU, Seung Hwan, 13564 Seongnam-si, Gyeonggi-do (KR); SIM, Sang Gyoo, 06939 Dongjak-gu, Seoul (KR)
(74) Representative: Stöckeler, Ferdinand

(57) **Abstract**

A method of evaluating application installation suitability based on a vehicle security profile according to one embodiment of the present invention may include downloading application software to be installed in a vehicle, comparing the minimum security requirements of the application software with a vehicle security specification profile and evaluating installation suitability of the application software, and installing the application software in the vehicle when the installation suitability of the application software is approved.

## Description

### CROSS-REFERENCE TO RELATED APPLICATIONS

This application claims priority to Korean Patent Application No. 2024-0199711 filed on December 30, 2024 in the Korean Intellectual Property Office (KIPO), the entire contents of which are hereby incorporated by reference.

### BACKGROUND

### 1. Technical Field

The present invention relates to a security technology for software and devices in a vehicle, and more specifically, to a method of evaluating application software and providing security for software and devices in a vehicle before the application software is stored in the vehicle.

### 2. Related Art

The description stated in this section simply provides background information on the present embodiment and does not constitute the related art.

Vehicles are evolving into a connected car, a smart car, and the like to provide drivers with various convenient functions. Not only are the vehicles evolving intelligently, but they are also evolving into an intelligent transportation system that ultimately reduces traffic accidents and increases traffic efficiency in conjunction with traffic control systems such as driving roads and traffic lights.

In particular, the rapid increase and connectivity of in-vehicle electronic control devices among the information and communication technologies provided for driver convenience in recent vehicle environments has significantly contributed to enhancing driver and user convenience, but in addition to safety concerns, the possibility of exposure to external hacking has also increased accordingly.

Unlike the conventional network environments such as the Internet and the like, whether security is secured is directly related to the lives of the driver and passengers, and when security is not ensured, the cost to be paid when a dangerous situation occurs can be significant, and thus the demand for technological development to secure vehicle network security is steadily increasing.

Recently, since in-vehicle hardware devices are coupled with software and driven, efforts to secure security through the evaluation and verification of various software installed in a vehicle are required to manage the security of software and hardware devices in a vehicle.

### SUMMARY

The present invention is directed to mitigating potential security threats that may arise from the installation and operation of application software, in advance before the application software is installed in a vehicle.

The present invention is also directed to mitigating potential security threats by verifying compatibility between the security requirements of application software installed in a vehicle and the security specifications that the vehicle may support.

The present invention is also directed to mitigating potential security threats by verifying whether the security functions of application software installed in a vehicle are sufficiently supported by the vehicle security specification profile.

According to one embodiment of the present invention, there is provided a method of evaluating application installation suitability based on a vehicle security profile, including downloading application software to be installed in a vehicle, comparing minimum security requirements of the application software with a vehicle security specification profile and evaluating installation suitability of the application software, and installing the application software in the vehicle when the installation suitability of the application software is approved, verified, or confirmed.

In the evaluating of the installation suitability of the application software, the installation suitability of the application software may be evaluated based on whether the vehicle security specification profile satisfies the minimum security requirements of the application software.

In the method of evaluating application installation suitability based on a vehicle security profile according to one embodiment of the present invention, when the vehicle security specification profile satisfies the minimum security requirements of the application software, the installation suitability of the application software may be approved, verified, or confirmed.

In the method of evaluating application installation suitability based on a vehicle security profile according to one embodiment of the present invention, the evaluating of the installation suitability of the application software may include: extracting security functions supported by the vehicle based on the vehicle security specification profile; extracting security functions required by the application software based on the minimum security requirements of the application software; and evaluating the installation suitability of the application software based on whether the security functions supported by the vehicle satisfy or are fully compatible with the security functions required by the application software.

In the evaluating of the installation suitability of the application software, the installation suitability of the application software may be evaluated based on whether the vehicle supports a first security function based on the vehicle security specification profile when the application software supports the first security function responding to a specific security attack or threat.

In the method of evaluating application installation suitability based on a vehicle security profile according to one embodiment of the present invention, the vehicle security specification profile may include at least one of software specifications, hardware specifications, and/or availability specifications.

In the method of evaluating application installation suitability based on a vehicle security profile according to one embodiment of the present invention, the software specifications may include at least one of software security enhancement level information, an encryption library installed in the vehicle, version information of the encryption library, and/or whether a security function responding to a specific security attack or threat is supported.

In the method of evaluating application installation suitability based on a vehicle security profile according to one embodiment of the present invention, the hardware specifications may include at least one of an HSM, a hardware-based key storage, a trusted execution environment (TEE), a trusted platform module (TPM), a secure storage, and/or a secure application execution support module (or element).

In the method of evaluating application installation suitability based on a vehicle security profile according to one embodiment of the present invention, the availability specifications may include at least one of the number of vehicle-to-everything (V2X) messages processed per reference time, the number of internal communication messages processed per reference time, hardware specifications for processing communication messages, security computation algorithms supported by the hardware specifications, and/or security computation algorithms for autonomous driving supported by the hardware specifications.

The method of evaluating application installation suitability based on a vehicle security profile according to one embodiment of the present invention may further include storing the security specification profile generated during a vehicle production (or manufacturing) process in a storage in the vehicle.

According to one embodiment of the present invention, there is provided a system for evaluating application installation suitability based on a vehicle security profile, including a memory configured to store at least one program instruction, and a processor configured to execute the at least one program instruction, wherein the processor executes the at least one instruction to download application software to be installed in a vehicle, compare minimum security requirements of the application software with a vehicle security specification profile to evaluate installation suitability of the application software, and install the application software in the vehicle when the installation suitability of the application software is approved, verified, or confirmed.

When evaluating the installation suitability of the application software, the processor may evaluate the installation suitability of the application software based on whether the vehicle security specification profile satisfies the minimum security requirements of the application software.

In the system for evaluating application installation suitability based on a vehicle security profile according to one embodiment of the present invention, when the vehicle security specification profile satisfies the minimum security requirements of the application software, the installation suitability of the application software may be approved, verified, or confirmed.

When evaluating the installation suitability of the application software, the processor may extract security functions supported by the vehicle based on the vehicle security specification, extract security functions required by the application software based on the minimum security requirements of the application software, and evaluate the installation suitability of the application software based on whether the security functions supported by the vehicle satisfy or are fully compatible with the security functions required by the application software.

When evaluating the installation suitability of the application software, the processor may evaluate the installation suitability of the application software based on whether the vehicle supports a first security function based on the vehicle security specification profile when the application software supports the first security function responding to a specific security attack or threat.

In the system for evaluating application installation suitability based on a vehicle security profile according to one embodiment of the present invention, the vehicle security specification profile may include at least one of software specifications, hardware specifications, and/or availability specifications.

In the system for evaluating application installation suitability based on a vehicle security profile according to one embodiment of the present invention, the software specifications may include at least one of software security enhancement level information, an encryption library installed in the vehicle, version information of the encryption library, and/or whether a security function responding to a specific security attack or threat is supported.

In the system for evaluating application installation suitability based on a vehicle security profile according to one embodiment of the present invention, the hardware specifications may include at least one of an HSM, a hardware-based key storage, a TEE, a TPM, a secure storage, and/or a secure application execution support module (or element).

In the system for evaluating application installation suitability based on a vehicle security profile according to one embodiment of the present invention, the availability specifications may include at least one of the number of V2X messages processed per reference time, the number of internal communication messages processed per reference time, hardware specifications for processing communication messages, security computation algorithms supported by the hardware specifications, and/or security computation algorithms for autonomous driving supported by the hardware specifications.

In the system for evaluating application installation suitability based on a vehicle security profile according to one embodiment of the present invention, a security specification profile generated during the vehicle production (or manufacturing) process may be stored in an internal storage in the vehicle.

### BRIEF DESCRIPTION OF DRAWINGS

Example embodiments of the present invention will become more apparent by describing in detail example embodiments of the present invention with reference to the accompanying drawings, in which:
FIG. 1 is a conceptual diagram showing a process of operating application software installed in a vehicle in conjunction with software, hardware, and platform within the vehicle;
FIG. 2 is a conceptual diagram showing a method of evaluating application installation suitability based on a vehicle security profile and a system/device in which the method operates according to one embodiment of the present invention;
FIG. 3 is a flowchart showing the method of evaluating application installation suitability based on a vehicle security profile according to one embodiment of the present invention; and
FIG. 4 is a conceptual diagram showing an example of a generalized computing system in which a system for evaluating application installation suitability based on a vehicle security profile, which may perform at least some of the processes of FIGS. 1 to 3, according to one embodiment of the present invention is implemented.

### DETAILED DESCRIPTION OF THE EMBODIMENTS

Since the present invention may have various changes and various embodiments, specific embodiments are shown and described in the accompanying drawings. However, it should be understood that it is not intended to limit specific embodiments, and it should be understood to include all modifications, equivalents, and substitutes included in the spirit and scope of the present invention.

Terms such as first and second may be used to describe various components, but the components should not be limited by the terms. The terms are used only for the purpose of distinguishing one component from another. For example, a second component may be referred to as a first component, and similarly, the first component may also be referred to as the second component without departing from the scope of the present disclosure. The term "and/or" includes a combination of a plurality of related listed items or any of the plurality of related listed items.

In embodiments of the present application, the term "at least one of A and B" may mean "at least one of A or B" or "at least one of one or more combinations of A and B." In addition, in the embodiments of the present application, the term "one or more of A and B" may mean "one or more of A or B" or "one or more of one or more combinations of A and B."

When a certain component is described as being "connected" or "coupled" to the other component, it should be understood that the certain component may be directly connected or coupled to the other component or another component may be present therebetween. On the other hand, when a certain component is described as being "directly connected" or "directly coupled" to another component, it should be understood that others components are not present therebetween.

The terms used in the present application are only used to describe specific embodiments and are not intended to limit the present invention. The singular includes the plural unless the context clearly dictates otherwise. In the application, it should be understood that terms "include" and "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those of ordinary skill in the art to which the present disclosure pertains. Terms such as those defined in a commonly used dictionary should be construed as having a meaning consistent with the meaning in the context of the related art and should not be construed in an ideal or excessively formal meaning unless explicitly defined in the application.

Meanwhile, even when technology was known prior to the filing date of this application, it may be incorporated into the configuration of the present invention as needed, and this will be described in the present specification without departing from the spirit of the present invention. However, in describing the configuration of the present invention, since the detailed description of technology known prior to the filing date and readily apparent to those skilled in the art may obscure the spirit of the present invention, the excessively detailed descriptions of known technologies will be omitted.

However, the present invention is not intended to claim rights to these known technologies, and the contents of these known technologies may be incorporated into the present invention as long as they do not depart from the spirit of the present invention.

Hereinafter, exemplary embodiments of the present invention will be described in detail with reference to the accompanying drawings. In describing the present invention, in order to facilitate the overall understanding, the same reference numerals are used for the same components in drawings, and overlapping descriptions of the same components will be omitted.

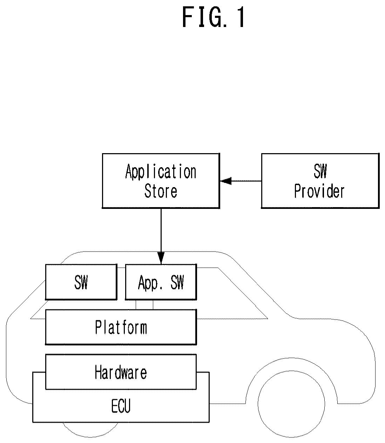

FIG. 1 is a conceptual diagram showing a process of operating application software installed in a vehicle in conjunction with software, hardware, and platform within the vehicle.

Referring to FIG. 1, application software provided by a software provider to an application store may be downloaded to a vehicle based on a user's selection or system instructions.

Application software downloaded and installed in the vehicle may perform specific functions and provide services within an in-vehicle software/hardware system in conjunction with the existing software, platform, and/or hardware previously installed in the vehicle.

As shown in FIG. 1, with the recent technological advancement, in-vehicle architectures have been shifting to software-defined vehicle (SDV) architectures, leading to a rapid increase in the number of pieces of in-vehicle software.

As the number of pieces of in-vehicle software rapidly increases, security functions related to the in-vehicle software are required.

In the case of the SDV architecture shown in FIG. 1, the in-vehicle software may be easily wirelessly installed and updated through over-the-air (OTA) updates even after vehicle delivery.

Applications may be downloaded and installed from an in-vehicle application store like an app store of a smartphone. That is, based on the SDV architecture and OTA technology, a driver and passengers can easily download and install applications for a vehicle from an application store.

Meanwhile, applications may be tailored to specific vehicle models, but applications designed for multiple vehicle models rather than for the specific vehicle tend to require the same security requirements regardless of vehicle models.

In reality, since each vehicle model supports different security capabilities and/or specifications, potential security threats may arise from the installed application software operating without considering the capabilities or specifications of the vehicle.

For example, forcing excessive security requirements on some vehicle models can prevent the application software from fully performing its intended function and cause performance degradation or malfunctions.

When an application is designed to operate on all vehicle models, an attack on a vehicle with a lower security level may indirectly threaten the data of a vehicle model with a higher security level.

Specifically, when the encryption level of one vehicle model is low, this could be exploited to attack the network, and it is possible to assume an attack scenario in which data communication of a vehicle model with a higher security level is eavesdropped on or tampered with.

Accordingly, when the same application is installed on all vehicle models, updates and patch management tailored to the security specifications of each vehicle model are required, and many resources may be required for these updates and management.

For example, it is assumed that a car payment-related application software requires 512-bit symmetric key encryption, while the vehicle supports only 256-bit symmetric key encryption. When such a difference in security function is not recognized during installation or operation, the application software may approve the car payment without recognizing that the encryption provided by the vehicle may not be complete.

In this way, car payment or similar transactions with insufficient security may result in fraud payment. In addition, when subsequent actions are performed based on the approval of this transaction, security threats such as personal information leakage may occur.

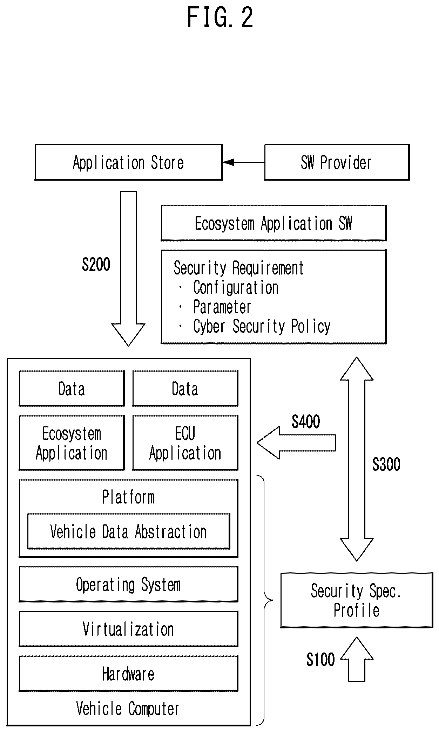

Based on the environment of FIG. 1, there is a problem that potential security threats may occur, and thus in order to resolve this issue, the present invention proposes a method of mitigating potential security threats by determining whether a vehicle satisfies the minimum security requirements required by an application prior to installation through the embodiment shown in FIGS. 2 to 4, which will be described below.

In the embodiment shown in FIGS. 2 to 4, a vehicle security specification profile and the minimum security requirements for the application to run may be defined.

Whether a vehicle may be installed or is suitable for installation may be determined based on the vehicle security specification profile and the minimum security requirements of the application.

FIG. 2 is a conceptual diagram showing a method of evaluating application installation suitability based on a vehicle security profile and a system/device in which the method operates according to one embodiment of the present invention.

A software provider (SW Provider) may provide an application including the minimum security requirements to an application store.

The vehicle may download the application from the application store (S200).

Before installing the application, the vehicle may compare the minimum security requirements included in the application with a stored security specification profile (S300), and when the comparison result indicates that application installation is suitable/possible, the application may be installed in the vehicle (S400).

The vehicle security specification profile may typically be generated by the manufacturer and stored in the vehicle (S100).

Items included in the vehicle security specification profile and the minimum security requirements may be equivalently designed to be comparable. Items included in the vehicle security specification profile and the application security requirements may be proposed to be standardized or regularized.

For example, as shown in FIG. 2, items included in the vehicle security specification profile and the application security requirements may be standardized or regularized to include a) configuration, b) parameters, and/or c) cyber security policy, etc.

In this case, a) configuration may include, for example, whether a hardware security module (HSM) is activated, whether an intrusion detection system (IDS) is activated, and/or whether container isolation is applied to each application.

In addition, b) parameters may include, for example, a cryptographic algorithm and key length, a hash function/message authentication code (MAC) type, and/or a list of cipher suites.

In addition, c) cyber security policy may include, for example, a log monitoring policy, vulnerability response, patch management policy, etc.

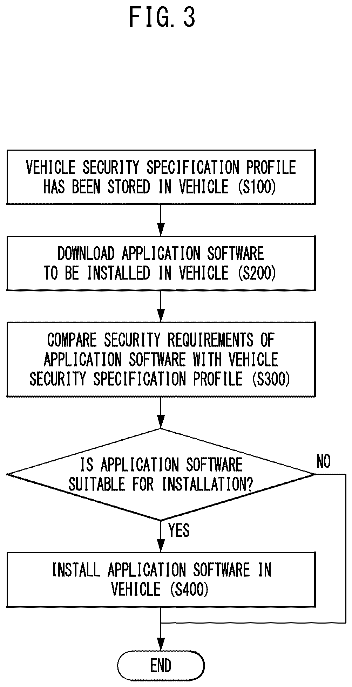

FIG. 3 is a flowchart showing the method of evaluating application installation suitability based on a vehicle security profile according to one embodiment of the present invention.

The operations prior to application installation may include the following two operations.

During a vehicle production process, a security specification profile may be generated and stored in a vehicle (S100).

Minimum security requirements may be defined by the software provider during application development and then included in the application.

The following operations may be required to start application installation.

The software provider may register the application with an application store. In this case, the application including the minimum security requirements may be registered with the application store by the software provider.

The application store may distribute the application, and the vehicle may download the application based on a user request or system instructions (S200).

An in-vehicle computer may compare the in-vehicle security specification profile with the minimum security requirements of the application to be installed (S300).

As the comparison result, when the in-vehicle security specification profile satisfies or is fully compatible with the minimum security requirements, the vehicle may install the application (S400).

Referring to FIGS. 2 and 3 together, a method of evaluating application installation suitability based on a vehicle security profile according to one embodiment of the present invention may include operation S200 of downloading application software to be installed in a vehicle, operation S300 of comparing the minimum security requirements of the application software with a vehicle security specification profile to evaluate installation suitability of the application software, and operation S400 of installing the application software in the vehicle when the installation suitability of the application software is approved, verified, or confirmed.

In operation S300 of evaluating the installation suitability of the application software, the installation suitability of the application software may be evaluated based on whether the vehicle security specification profile satisfies or is fully compatible with the minimum security requirements of the application software.

In the method of evaluating application installation suitability based on a vehicle security profile according to one embodiment of the present invention, when the vehicle security specification profile satisfies or is fully compatible with the minimum security requirements of the application software, the installation suitability of the application software may be approved, verified, or confirmed as suitable for installation.

In the method of evaluating application installation suitability based on a vehicle security profile according to one embodiment of the present invention, operation S300 of evaluating the installation suitability of the application software may include extracting security functions that the vehicle may support based on the vehicle security specification profile, extracting security functions required by the application software based on the minimum security requirements of the application software, and evaluating the installation suitability of the application software based on whether the security functions that the vehicle may support satisfy, are fully compatible with, or are capable of performing completely the security functions required by the application software.

In operation S300 of evaluating the installation suitability of the application software, when the application software supports a first security function responding to a specific security attack or threat, the installation suitability of the application software may be evaluated based on whether the vehicle may support the first security function based on the vehicle security specification profile.

In the method of evaluating application installation suitability based on a vehicle security profile according to one embodiment of the present invention, the vehicle security specification profile may include at least one of software specifications, hardware specifications, and/or availability specifications.

The vehicle security specification profile may be classified as software specifications, hardware specifications, and/or availability specifications as described above and may additionally include specifications that may be supported during hardware-software linkage.

In the method of evaluating application installation suitability based on a vehicle security profile according to one embodiment of the present invention, the software specifications may include at least one of software security enhancement level information, an encryption library installed in the vehicle, version information of the encryption library, and/or support for security functions responding to specific security attacks or threats.

For example, it may be assumed that the existing version of software does not support a method of responding to a new attack that exceeds the security capabilities of the existing version. In this case, a new version of application software may support a security policy or function to respond to the new attack, and such a security policy or function may require a new version of software specifications or hardware-software linkage specifications.

When the new version of application software is implemented assuming that the vehicle provides sufficient software or software-hardware linkage specifications, it may be assumed that the new version of application software will operate after being installed in the vehicle.

In this case, when the security policy or function is not actually and properly performed to respond to the new attack due to lack of specifications of the vehicle, the application software may be unaware of this issue and may mistakenly determine that security is properly maintained, thereby potentially approving a transaction triggered by the new attack.

In addition, when the transaction triggered by the new attack is misidentified and approved, transactions before and after the transaction may also be approved, further increasing the threat of a security incident.

In the method of evaluating application installation suitability based on a vehicle security profile according to one embodiment of the present invention, the hardware specifications may include at least one of an HSM, a hardware-based key storage, a trusted execution environment (TEE), a trusted platform module (TPM), a secure storage, and/or a secure application execution support module (or element).

In this case, the hardware specifications may include whether hardware-based security computing devices are supported, whether hardware-enhanced storage space is provided, whether hardware-based advanced encryption is supported, whether encryption/decryption performance is enhanced, and/or whether defenses against known/new security attacks are provided.

In the method of evaluating application installation suitability based on a vehicle security profile according to one embodiment of the present invention, the availability specifications may include at least one of the number of vehicle-to-everything (V2X) messages processed per reference time, the number of internal communication messages processed per reference time, hardware specifications for processing communication messages, security computation algorithms supported by the hardware specifications, and/or security computation algorithms for autonomous driving supported by the hardware specifications.

The availability specifications may also include performance indicators based on the hardware-software linkage.

In addition, the availability specifications may be presented so that the hardware-software linkage may determine whether central processing unit (CPU) specifications for communication/message processing support sufficiently fast computation for advanced security algorithms and/or support the fast computation and communication required by security algorithms for autonomous driving.

The vehicle security specification profile may be a set of information implemented to logically determine whether the security requirements may be supported through hardware, software, availability, compatibility, and/or hardware-software linkage, and the like.

The method of evaluating application installation suitability based on a vehicle security profile according to one embodiment of the present invention may further include storing a security specification profile generated during the vehicle production/manufacturing process in an internal storage in the vehicle (S100).

According to embodiments of the present invention, it is possible to mitigate potential security threats that may arise from the installation and operation of application software before the application software is installed in a vehicle.

According to embodiments of the present invention, it is possible to mitigate potential security threats by verifying compatibility between the security requirements of application software installed in a vehicle and the security specifications that the vehicle can support.

According to embodiments of the present invention, it is possible to mitigate potential security threats by verifying whether the security functions of application software installed in a vehicle are sufficiently supported by the vehicle security specification profile.

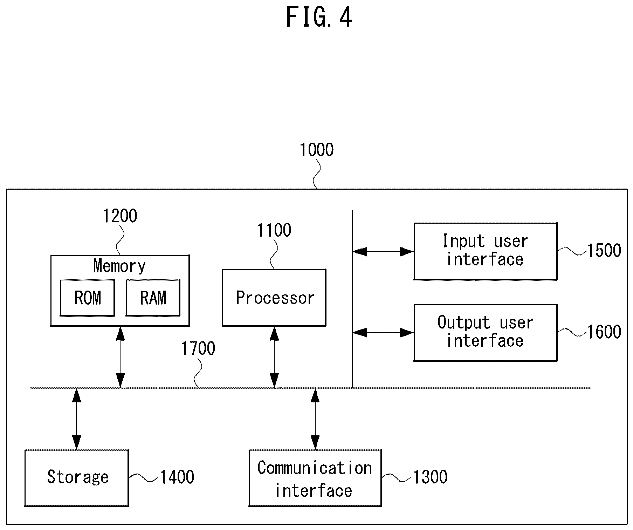

FIG. 4 is a conceptual diagram showing an example of a generalized computing system in which a system for evaluating application installation suitability based on a vehicle security profile, which may perform at least some of the processes of FIGS. 1 to 3, according to one embodiment of the present invention is implemented.

At least some processes of the method of evaluating application installation suitability based on a vehicle security profile according to one embodiment of the present invention may be executed by a computing system 1000 of FIG. 4 as shown in FIGS. 2 and 3.

Referring to FIG. 4, the computing system 1000 according to one embodiment of the present invention may include a processor 1100, a memory 1200, a communication interface 1300, a storage 1400, an input user interface 1500, an output user interface 1600, and a bus 1700.

The computing system 1000 according to one embodiment of the present invention may include at least one processor 1100 and the memory 1200 that stores instructions that instruct the at least one processor 1100 to perform at least one operation. At least some operations of the method according to one embodiment of the present invention may be performed by the at least one processor 1100 loading and executing instructions from the memory 1200.

The processor 1100 may be a CPU, a graphics processing unit (GPU), or a dedicated processor on which methods according to embodiments of the present invention are performed.

The memory 1200 and the storage 1400 may each be formed as at least one of a volatile storage medium and a non-volatile storage medium. For example, the memory 1200 may be formed as at least one of a read-only memory (ROM) and a random access memory (RAM).

In addition, the computing system 1000 may include the communication interface 1300 that performs communication via a wireless network.

In addition, the computing system 1000 may further include the storage 1400, the input user interface 1500, the output user interface 1600, etc.

In addition, the components included in the computing system 1000 may be connected via the bus 1700 and may communicate with each other.

Examples of the computing system 1000 of the present invention may include a desktop computer, a laptop computer, a notebook, a smart phone, a tablet PC, a mobile phone, a smart watch, a smart glass, an e-book reader, a portable multimedia player (PMP), a portable game console, a navigation device, a digital camera, a digital multimedia broadcasting (DMB) player, a digital audio recorder, a digital audio player, a digital video recorder, a digital video player, a personal digital assistant (PDA), and the like, which are capable of communication.

A system for evaluating application installation suitability based on a vehicle security profile according to one embodiment of the present invention may include the memory 1200 that stores at least one computer-readable instruction, and the processor 1100 that executes the at least one instruction.

In the system for evaluating application installation suitability based on a vehicle security profile according to one embodiment of the present invention, the processor 1100 may download application software to be installed in a vehicle by at least one instruction (S200), compare the minimum security requirements of the application software with the vehicle security specification profile to evaluate the installation suitability of the application software (S300), and install the application software in the vehicle when the installation suitability of the application software is approved, verified, or confirmed (S400).

When evaluating the installation suitability of the application software (S300), the processor 1100 may evaluate the installation suitability of the application software based on whether the vehicle security specification profile satisfies or is fully compatible with the minimum security requirements of the application software.

In the system for evaluating application installation suitability based on a vehicle security profile according to one embodiment of the present invention, when the vehicle security specification profile satisfies or is fully compatible with the minimum security requirements of the application software, the installation suitability of the application software may be approved, verified, or confirmed.

When evaluating the installation suitability of the application software (S300), the processor 1100 may extract security functions that the vehicle may support based on the vehicle security specification profile, extract security functions required by the application software based on the minimum security requirements of the application software, and evaluate the installation suitability of the application software based on whether the security functions that the vehicle may satisfy, fully support, or be compatible with the security functions required by the application software.

When evaluating the installation suitability of the application software (S300), when the application software supports a first security function responding to a specific security attack or threat, the processor 1100 may evaluate the installation suitability of the application software based on whether the vehicle may support the first security function based on the vehicle security specification profile.

In the system for evaluating application installation suitability based on a vehicle security profile according to one embodiment of the present invention, the vehicle security specification profile may include at least one of software specifications, hardware specifications, and/or availability specifications.

In the system for evaluating application installation suitability based on a vehicle security profile according to one embodiment of the present invention, the software specifications may include at least one of software security enhancement level information, an encryption library installed in the vehicle, version information of the encryption library, and/or support for security functions responding to specific security attacks or threats.

In the system for evaluating application installation suitability based on a vehicle security profile according to one embodiment of the present invention, the hardware specifications may include at least one of an HSM, a hardware-based key storage, a TEE, a TPM, a secure storage, and/or a secure application execution support module (or element).

In the system for evaluating application installation suitability based on a vehicle security profile according to one embodiment of the present invention, the availability specifications may include at least one of the number of V2X messages processed per reference time, the number of internal communication messages processed per reference time, hardware specifications for processing communication messages, security computation algorithms supported by the hardware specifications, and/or security computation algorithms for autonomous driving supported by the hardware specifications.

In the system for evaluating application installation suitability based on a vehicle security profile according to one embodiment of the present invention, a security specification profile generated during the vehicle production/manufacturing process may be stored in an internal storage in the vehicle (S100).

The operations of the method according to one embodiment of the present invention may be implemented as a computer-readable program or code on a computer-readable recording medium. The computer-readable recording medium includes any type of recording device in which information readable by a computer system is stored. In addition, the computer-readable recording medium may be distributed to a computer system connected via a network to allow the computer-readable program or code to be stored and executed in a distributed manner.

In addition, the computer-readable recording medium may include hardware devices specifically configured to store and execute program instructions, such as a ROM, a RAM, a flash memory, etc. The program instructions may include not only machine language code such as that produced by a compiler but also high-level language code that may be executed by a computer using an interpreter or the like.

While some aspects of the present invention have been described in the context of the system, the description may also represent a corresponding method, where blocks or devices correspond to the operations of the method or features of the operations of the method. Similarly, the aspects described in the context of the method may also be represented by corresponding blocks or items or features of corresponding devices. Some or all of the operations of the method may be, for example, performed by (or using) hardware devices, such as a microprocessor, a programmable computer, or an electronic circuit. In some embodiments, at least one of the most significant operations of the method may be performed by these devices.

In embodiments, a programmable logic device (e.g., a field-programmable gate array) may be used to perform some or all of the functions of the methods described herein. In embodiments, the field-programmable gate array may operate together with a microprocessor to perform one of the methods described herein. Generally, the methods are preferably performed by a certain hardware device.

According to embodiments of the present invention, it is possible to mitigate potential security threats that may arise from the installation and operation of application software before the application software is installed in a vehicle.

According to embodiments of the present invention, it is possible to mitigate potential security threats by verifying compatibility between the security requirements of application software installed in a vehicle and the security specifications that the vehicle can support.

According to embodiments of the present invention, it is possible to mitigate potential security threats by verifying whether the security functions of application software installed in a vehicle are sufficiently supported by the vehicle security specification profile.

Although the present invention has been described above with reference to exemplary embodiments of the present invention, those skilled in the art will understand that the present invention may be modified and changed variously without departing from the spirit and scope of the present invention as described in the appended claims.

## Claims

1. A method of evaluating application installation suitability based on a vehicle security profile, the method comprising:
downloading application software to be installed in a vehicle;
comparing minimum security requirements of the application software with a vehicle security specification profile and evaluating installation suitability of the application software; and
installing the application software in the vehicle based on the approved installation suitability of the application software.

2. The method of claim 1, wherein, for the evaluating of the installation suitability of the application software, the installation suitability of the application software is evaluated based on whether the vehicle security specification profile satisfies the minimum security requirements of the application software.

3. The method of claim 2, wherein, when the vehicle security specification profile satisfies the minimum security requirements of the application software, the installation suitability of the application software is verified.

4. The method of claim 1, wherein the evaluating of the installation suitability of the application software comprises:
extracting security functions supported by the vehicle based on the vehicle security specification profile;
extracting security functions required by the application software based on the minimum security requirements of the application software; and
evaluating the installation suitability of the application software based on whether the security functions supported by the vehicle are capable of completely performing the security functions required by the application software.

5. The method of claim 1, wherein, for the evaluating of the installation suitability of the application software, the installation suitability of the application software is evaluated based on whether the vehicle supports a first security function based on the vehicle security specification profile when the application software supports the first security function responding to a specific security attack or threat.

6. The method of claim 1, wherein the vehicle security specification profile includes one or more of software specifications, hardware specifications, or availability specifications.

7. The method of claim 6, wherein the software specifications include one or more of information on a software security enhancement level, an encryption library installed in the vehicle, version information of the encryption library, or whether a security function responding to a specific security attack or threat is supported.

8. The method of claim 6, wherein the hardware specifications include one or more of a hardware security module (HSM), a hardware-based key storage, a trusted execution environment (TEE), a trusted platform module (TPM), a secure storage, or a supporting element for secure application execution.

9. The method of claim 6, wherein the availability specifications include one or more of the number of vehicle-to-everything (V2X) messages processed per reference time, the number of internal communication messages processed per reference time, hardware specifications for processing communication messages, security computation algorithms supported by the hardware specifications, or security computation algorithms for autonomous driving supported by the hardware specifications.

10. The method of claim 1, further comprising storing the security specification profile generated during a vehicle manufacturing process in a storage in the vehicle.

11. A system for evaluating application installation suitability based on a vehicle security profile, the system comprising:
a memory configured to store at least one program instruction; and
a processor configured to execute the at least one program instruction,
wherein the processor is further configured to:
download application software to be installed in a vehicle;
compare minimum security requirements of the application software with a vehicle security specification profile to evaluate installation suitability of the application software; and
install the application software in the vehicle based on the approved installation suitability of the application software.

12. The system of claim 11, wherein, for evaluating the installation suitability of the application software, the processor is further configured to evaluate the installation suitability of the application software based on whether the vehicle security specification profile satisfies the minimum security requirements of the application software.

13. The system of claim 12, wherein, when the vehicle security specification profile satisfies the minimum security requirements of the application software, the installation suitability of the application software is verified.

14. The system of claim 11, wherein, for evaluating the installation suitability of the application software, the processor is further configured to:
extract security functions supported by the vehicle based on the vehicle security specification;
extract security functions required by the application software based on the minimum security requirements of the application software; and
evaluate the installation suitability of the application software based on whether the security functions supported by the vehicle are capable of completely performing the security functions required by the application software.

15. The system of claim 11, wherein, for evaluating the installation suitability of the application software, the processor is further configured to evaluate the installation suitability of the application software based on whether the vehicle supports a first security function based on the vehicle security specification profile when the application software supports the first security function responding to a specific security attack or threat.
